# EUROPEAN PATENT APPLICATION

(11) **EP 2 196 911 A1**
(43) Date of publication of application: **16.06.2010**
(21) Application number: 07785148.3
(22) Date of filing: 20.07.2007
(51) Int. Cl.: G06F 12/00

(54) **CONSTRUCTION AND METHOD FOR ENCRYPTING DIGITAL INFORMATION MEMORY CARD**

(71) Applicant: Lin, Hui, Neihu District Taipei City Taiwan (CN)
(72) Inventor: Lin, Hui, Neihu District Taipei City Taiwan (CN)
(74) Representative: Robba, Pierpaolo
(86) International application number: PCT/CN2007/002222
(87) International publication number: WO 2009/012613

(57) **Abstract**

An encryption method for a digital data memory card is provided. The memory card has a memory. The memory has a controller matching to a reader and a protection area, and is further partitioned with a partition table area and a file area; a protected storage identification code is written into one of the four areas by using an application programming interface (API); when the file area in the memory card is carried with a right object and if one reader desires to read data in the memory card, the protected storage identification code is used as an encryption mechanism so as to enhance the digital rights management for the digital data in the memory card. An assembly for performing the method is also included.

## Description

### TECHNICAL FIELD

The present invention related to an encryption method for a digital data memory card and an assembly for performing the same, especially a DRM (a digital rights management) in that data in the memory card is encrypted. An identification code and a right object are compared for accessing and downloading digital data in the memory card.

### BACKGROUND

Since the improvement of the computer and digital technologies, many created contents (such as movies or music, etc.) are converted into the forms of audio and / or video compression files. Then, the files are burned to CDs or DVDs, or other A / V carriers for playing. Other than movies and music, the contents even include speech contents, teaching contents, opera contents, etc. All these contents are converted into digital A / V compression files (in the following, they are called as digital data).

However due to the progress of compression and duplication, all contents can be easily convert into file formats which can be easily copied by duplication or burning technologies. With the widely use of networks, digital contents can be spread widely by uploading to networks and downloading from networks. As a result, the intellectual assets of creators cannot be well protected due to new duplication technologies so that people have low willing for creation. Therefore, there is an eager demand for a novel technology to prevent the digital contents from being copied as they are not permitted so as to protect the intellectual asset of musicians, publishers, actors, etc. and to match the requirement of intellectual laws.

Moreover, generally, most current digital carriers are CDs and DVDs. Other than some fewer erasable optical discs which can be burnt many times, most carriers cannot be burnt repeatedly. Since these carriers have large volumes, in many current used players (such as MP3), the digital contents are copied to memory cards (for example SD cards) for use.

Current memory cards are mainly used to store the digital data (which has same use as the discs). If the memory card can be used as a digital data carriers having the safety characters of secured digital card (SD) and the feature of small volume. A preferable digital data carriers can be formed, which can be carried easily and can be widely used with the safety function for the protection of the data therein. Other than high transmission speed and large capacity, current used SD memory cards are so cheap to be accepted by the masses. Thus, the time for using memory cards as digital data carriers has come.

Although the DRM (digital right management) in the PC can provide data transfer safety for music downloaded through network as the user pays fee for downloading operation so that the digital data can not be copied or spread illegally. It can also confine the times, identifies, time periods and copies for duplication of the download contents, but it can not provide data safety protection for the carriers itself (especially for the memory cards).

### SUMMARY

Accordingly, the object of the present invention is to provide an encryption method for a digital data memory card and an assembly for performing the same, especially a DRM (a digital rights management) in that data in the memory card is encrypted. An identification code is compared with a right object for accessing and downloading digital data in the memory card.

To achieve above object, the present invention provides an encryption method for a digital data memory card, wherein a memory is installed in a memory card; the memory has a controller matching to a reader and a protection area, and is partitioned with a partition table area and a file area; a protected storage identification code is written into one of the four areas by using an application programming interface; when the file area in the memory card is carried with a right object and if one reader desires to read data in the memory card, the protected storage identification code is used as an encryption mechanism so as to enhance the digital rights management for the digital data in the memory card.

Therefore, the memory card has four areas, which are the controller, the protection area, the partition table area and the file area. The protected storage identification code may have following way for being recorded into the memory card.
1. The protected storage identification code is recorded in the controller of the memory of the memory card. Then a general used memory card reader (such as an SD reader) with an API dedicated to the controller of the memory of the memory card is used for reading or writing. This is a safety way.
2. If the protected storage identification code is recorded in the protection area of the memory card. A special tool can be used for partitioning the protection area of the memory card. A general SD reader and an API dedicated from the protection area of the memory of the memory card are used for reading and writing.
3. If the protected storage identification code is recorded to the partition table area of a hard disk, it is only to use window system or other OS to format it for generating an area for recording.
4. If the protected storage identification code is recorded to a file area, it is only needed to use window or other OS to format the file area so as to generate an area for recording the PSID.

The various objects and advantages of the present invention will be more readily understood from the following detailed description when read in conjunction with the appended drawing.

### BRIEF DESCRIPTION OF THE DRAWINGS

Figure 1 is a structural schematic view of the memory card of the present invention.
Figure 2 shows the operation flow diagram of the present invention.
In the drawing(s):
- 1:: Memory card
- 11:: Memory
- 111: Controller
- 112:: Protection area
- 113:: Partition table area
- 114:: File area
- 115:: Protected storage identification code (PSID)
- 116:: Right object

### DETAILED DESCRIPTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

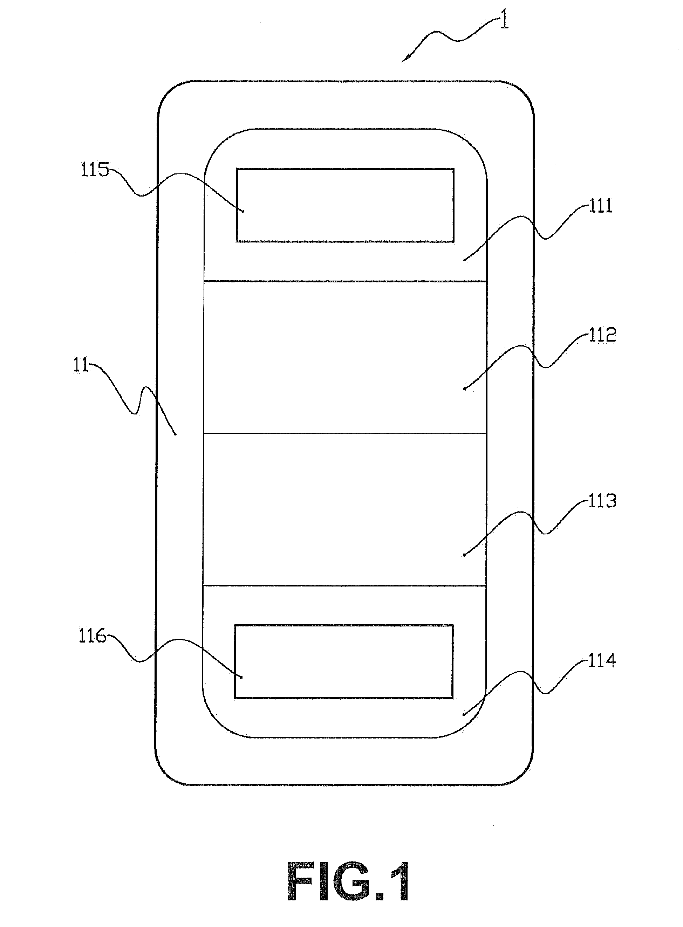

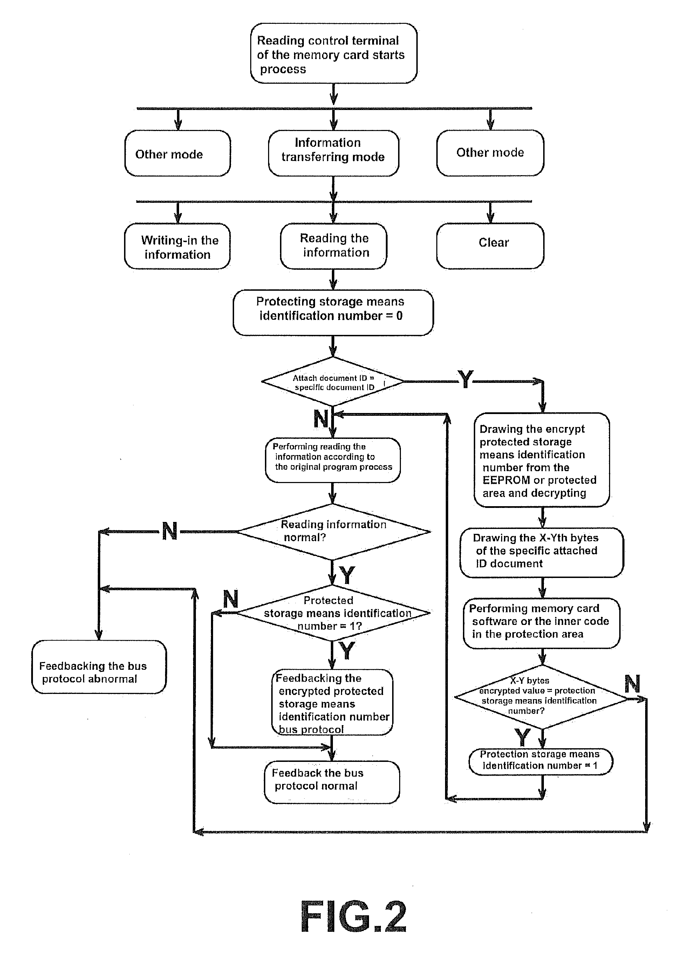

Referring to Fig. 1, the present invention relates to an encryption assembly for a digital data memory card, which comprises the following elements:
A memory card 1 has a memory 11 therein. Other than a controller 111 matching to a reader and a protection area 112, the memory also has a partition table area 113 and a file area 114. An application programming interface (API) serves to write a protected storage identification code 115 to above areas. When the file area 114 of the memory card 1 has carried with a right object 116, a protected storage identification code 115 is used to identify the right object so as to form an encryption mechanism to enhance the safety for digital rights management of the memory card 1.
With referring to Fig. 2, the manufacturer of the controller 111 of the memory card 1 must keep secret to the API, otherwise other people can get the protected storage identification code 115 in the memory card 1, for example, the manufacturer needs to keep secret to the programs and the protected storage identification codes 115 in the protection area 112.
However to further assure the protected storage identification code 115 in the memory card 1, in the present invention, the memory card 1 is formed as a personal storage disc. An integral formed USB is integrated with the memory card 1 so that the user can transfer data through the USB interface of a computer with using any reader or transmission line. Thus, it is impossible to get the memory by detaching the memory card 1, even to resolve the contents therein illegally.
The memory 11 used in the present invention may be a flash memory, or an EEPROM (Electrically Erasable Programmable Read-Only Memory).
   1. The protected storage identification code 115 is recorded in the controller 111 of the memory 11 of the memory card 1. Then a general used memory card reader (such as an SD reader) with an API dedicated to the controller 111 of the memory of the memory card is used for reading or writing. This is a safe way for data protection.
   2. If the protected storage identification code 115 is recorded in the protection area 112 of the memory card 1. A special tool can be used for partitioning the protection area 112 of the memory card 1. A general SD reader and an API dedicated from the protection area 112 of the memory of the memory card 1 are used for reading and writing.
   3. If the protected storage identification code 115 is recorded to the partition table area 113 of a hard disk, it is only to use window system or other OS (operation system) to format it for generating an area for recording.
   4. If the protected storage identification code 115 is recorded to a file area 114, it is only needed to use window system or other OS to format the file area 114 so as to generate an area for recording the PSID.

No matter what area stored the protected storage identification code 115, the right object 116 must get the right in advance for accessing digital data in the memory card 1. When a device, such as a PC, a handset, or other playing devices (all they are simply called as readers) desires to access a corresponding right object 116, the controller 111 will decrypt the files of the right object 116 by using the firmware of the controller 111 or the program of the protection area 112 and acquire the protected storage identification code 115 from the decrypted file of the right object 116 which is compared with the protected storage identification code 115 stored in the protection area 112 (or other area, this is not used to confine the scope of the present invention). If they are matched, the file of the right object 116 is provided to the playing device. If not, the playing device is informed that the reading operation is not permissible.

The Fig. 2 will be further described herein. When the controller 111 accepts reader instructions for reading data, firstly it will identify a specific sub-file name (such as ROM, but this is not used to confine the scope of the present invention), when it is assured that the sub-file name is formed by the variables of the protection area 112. It is encrypted and stored in the protection area 112 according to the EEPROM (Electrically Erasable Programmable Read-Only Memory) and (Flash Memory). A bit data of the sub-file name is read out to be stored in the memory card firmware of the controller 111 or stored in the code of the protection area 112. Then it is determined whether the read bit data is matched to the protected storage identification code 115. If yes, the reader can read data in the memory card. If not, an abnormal signal is sent out according to a bus protocol.

The present invention provides a digital data protection management mechanism for DRM (digital right management). Other than music and image, even the video digital data can be protected effectively to assure only the authorized digital data can be used. The illegal invader cannot access the data.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. An encryption method for a digital data memory card, wherein a memory is installed in a memory card; the memory has a controller matching to a reader and a protection area, and is further partitioned with a partition table area and a file area; a protected storage identification code is written into one of the four areas by using an application programming interface; when the file area in the memory card is carried with a right object and if one reader desires to read data in the memory card, the protected storage identification code is used as an encryption mechanism so as to enhance the digital rights management for the digital data in the memory card.

2. The encryption method for a digital data memory card as claimed in claim 1, wherein the memory is one of a flash memory and a EEPROM (Electrically Erasable Programmable Read-Only Memory).

3. The encryption method for a digital data memory card as claimed in claim 1, wherein the API is a recorded into the protection area by using the controller.

4. The encryption method for a digital data memory card as claimed in claim 1, wherein the API is recorded into a partition table area of a hard disc by using a window.

5. The encryption method for a digital data memory card as claimed in claim 1, wherein the API is recorded into the file area of a flash memory by using a window.

6. The encryption method for a digital data memory card as claimed in claim 1, wherein the memory card is a personal storage disc.

7. The encryption assembly for a digital data memory card which comprises a memory; the memory comprises:
a controller;
a protection area;
a partition table area; and a
a file area;
wherein a protected storage identification code is recorded one of above four areas by using an application programming interface (API).

8. The encryption assembly for a digital data memory card as claimed in claim 7, wherein the memory is one of a flash memory and an EEPROM (Electrically Erasable Programmable Read-Only Memory).

9. The encryption assembly for a digital data memory card as claimed in claim 7, wherein the memory card is a personal storage disc.
